# EUROPÄISCHE PATENTSCHRIFT

(11) **EP 2 054 186 B1**
(45) Veröffentlichungstag und Bekanntmachung des Hinweises auf die Patenterteilung: **02.08.2017**
(21) Anmeldenummer: 07802818.0
(22) Anmeldetag: 23.08.2007
(51) Int. Cl.: B23C 1/04, A61C 13/00

(54) **BEARBEITUNGSMASCHINE, INSBESONDERE FÜR DIE HERSTELLUNG VON ZAHNERSATZEILEN ODER MODELLEN DAVON**
MACHINING DEVICE, PARTICULARLY FOR THE PRODUCTION OF TOOTH REPLACEMENT PARTS OR MODELS THEREOF
MACHINE D'USINAGE, EN PARTICULIER CONÇUE POUR FABRIQUER DES PIÈCES DE PROTHÈSE DENTAIRE OU DES GABARITS DE CELLES-CI

(30) Priorität: 24.08.2006 DE 102006039618
(43) Veröffentlichungstag der Anmeldung: 06.05.2009
(73) Patentinhaber: Sirona Dental Systems GmbH, 64625 Bensheim (DE)
(72) Erfinder: BASLER, Franz, 69514 Laudenbach (DE)
(74) Vertreter: Sommer, Peter
(86) Internationale Anmeldenummer: PCT/EP2007/058755
(87) Internationale Veröffentlichungsnummer: WO 2008/023043

(56) Entgegenhaltungen:
- WO-A-03/061903
- DE-A1- 10 019 669
- JP-A- 58 171 229

## Beschreibung

Die Erfindung betrifft eine Bearbeitungsmaschine, insbesondere für die Herstellung von Zahnersatzeilen oder Modellen davon. Die Bearbeitungsmaschine weist einen Werkstückhalter und mindestens ein Bearbeitungswerkzeug auf, welche zusammen einen Bearbeitungsraum für ein darin angebrachtes Werkstück bilden.

### Stand der Technik

Aus der EP 0 455 853 B1 ist eine Bearbeitungsmaschine für die Herstellung von Zahnersatzeilen bekannt, bei der die Vorschubachse des Werkstücks horizontal in dem Bearbeitungsraum liegt.

Aus der DE 199 28 002 C1 ist ein Tischgerät in liegender Anordnung bekannt. Aufgrund der waagrechten Anordnung der Werkstückachse wächst der Platzbedarf in der Tiefe relativ mit der Größe des Bearbeitungsraums und aufgrund der flachen Bauweise ist die Aufnahmemenge der Kühlflüssigkeit eingeschränkt.

WO 03/061903 A offenbart eine Bearbeitungsmaschine gemäß der Präambel von Anspruch 1.

DE 100 19 669 A1 offenbart eine Bearbeitungsmaschine mit einem schrägen Vorschub des Werkstücks. Die Aufgabe der Erfindung besteht darin, eine Bearbeitungsmaschine insbesondere für die Herstellung von Zahnersatzteilen oder Modellen davon bereitzustellen, welchen einen vergrößerten Bearbeitungsraum aufweist und damit die Ausarbeitung großer Restaurationen ermöglicht. Dabei sollen die Platzverhältnisse in der zahnärztlichen Praxis und im zahntechnischen Labor berücksichtigt werden, insbesondere die Tischtiefen und die Höhe zwischen dem Tisch und den Oberschränken. Übliche Tischtiefen liegen zwischen 0,5m und 0,6m, die lichte Höhe liegt üblicherweise zwischen 0,4m und 0,6m.

### Darstellung der Erfindung

Eine erfindungsgemäße Bearbeitungsmaschine, insbesondere für die Herstellung von Zahnersatzteilen oder Modellen davon, weist einen Werkstückhalter und mindestens ein Bearbeitungswerkzeug auf, welche in einem Bearbeitungsraum für ein darin angebrachtes Werkstück angeordnet sind, wobei die Vorschubachse für das Werkstück in den Bearbeitungsraum hinein gegenüber der Horizontalen schräg gestellt ist.

Die Schrägstellung ist so, dass das Werkstück oberhalb des Werkstückhalters zu liegen kommt. Es ergibt sich damit ein gegenüber der Horizontalen negativer Winkel.

Die Anordnung der Vorschubachse des Werkstücks in einem von der Horizontalen nach unten abweichenden Winkel erlaubt die Minimierung des Platzbedarfs der Bearbeitungsmaschine, so dass die Tiefe und die Höhe des Gehäuses auf Maße begrenzt werden, die in der zahnärztlichen Praxis sowie im zahntechnischen Labor Standardmaßen der Einrichtung entsprechen. Gleichzeitig können sehr große Restaurationen gefertigt werden, da der Bearbeitungsraum bei gleicher Gehäusetiefe aufgrund der Schrägstellung größer bemessen werden kann. Bei einem Winkel von 45° ergibt sich ein um einen Faktor von 1,41 längerer Vorschubweg bei gleicher Bautiefe des Bearbeitungsraums.

Aufgrund der schrägen Anordnung ist auch die Werkstückachse außerhalb des sich im Bearbeitungsraum bildenden Sumpfes aus Kühlflüssigkeit und Schleifstaub angeordnet, so dass die Lager der Werkstückachse nicht mit Kühlflüssigkeit in Berührung kommen.

Die schräge Anordnung der Werkstückachse ermöglicht darüber hinaus eine Einführung des Werkstücks in den Werkstückhalter in einer Richtung, die der Blickrichtung ähnlich ist. Es hat sich gezeigt, dass es durchaus nicht unproblematisch ist, ein Werkstück in ein horizontal oder vertikal ausgerichtetes Spannfutter einzubringen. Die schräge Anordnung führt so zu einer schnelleren Positionierung der Werkstücks bezüglich des Spannfutters und die Zeitdauer für die Beschickung der Bearbeitungsmaschine wird verringert.

Vorteilhafterweise kann der Winkel zwischen 30 und 60 Grad liegen, vorzugsweise bei 45 Grad. Dadurch lässt sich ein Kompromiss zwischen dem Platzbedarf in der Tiefe und dem Platzbedarf in der Höhe erreichen.

Vorteilhafterweise ist der Bearbeitungsraum in einem das mindestens eine Bearbeitungswerkzeug und dessen Werkzeugaufnahme sowie den Werkstückhalter und dessen Führung sowie ein Maschinenbett umschließenden Gehäuse angeordnet. Dadurch kann ein kompaktes Gerät geschaffen werden, das glatte Oberflächen aufweist und einfach zu reinigen ist.

Vorteilhafterweise kann das Maschinenbett schräg im Gehäuse angeordnet sein und es kann unterhalb des Bearbeitungsraums und vor dem Maschinenbett ein Behälter für Kühlflüssigkeit vorgesehen sein, was zu einem einfachen Abfluss der Kühlflüssigkeit aus dem Bearbeitungsraum führt. Aufgrund der schrägen Anordnung kann darüber hinaus ein Behälter für Kühlflüssigkeit mit ausreichendgroßem Volumen und einer entsprechenden Höhe verwendet werden, was zu einem besseren Absetzverhalten des Schleifstaubs und damit zu längeren Wechselintervallen des Behälters führt.

Vorteilhafterweise kann die Bearbeitungsmaschine als Tischgerät ausgebildet sein.

Besonders vorteilhaft ist es, wenn die Bearbeitungsmaschine ein den Bearbeitungsraum zumindest um 150 Grad umgebenden Durch einen Deckel mit einem derartigen Umfangswinkel ist es möglich, den Bearbeitungsvorgang von der Vorderseite und von der Hinterseite zu beobachten.

Vorteilhafterweise ist im Gehäuse seitlich unterhalb des Bearbeitungsraums Stauraum vorhanden, der von der Vorderseite des Gehäuses her zugänglich ist. Durch die schräge Anordnung der Werkstückachse steht somit seitlich unterhalb des Bearbeitungsraums zusätzlicher Platz im Gehäuse zur Verfügung, in dem beispielsweise Schubladen angebracht werden können, um Zubehörteile unterzubringen.

### Kurzbeschreibung der Zeichnung

In der Zeichnung ist ein Ausführungsbeispiel der Erfindung dargestellt. Es zeigt:
- Fig. 1: eine Bearbeitungsmaschine als Tischgerät in Draufsicht, die
- Fig.2: die Bearbeitungsmaschine aus Fig. 1 im Schnitt AA gemäß Fig. 2.

### Ausführungsbeispiel

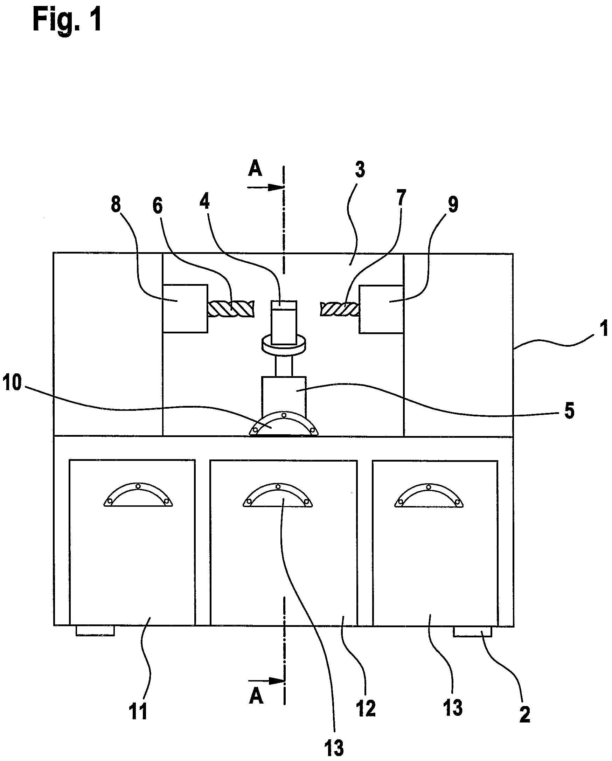

Die in Fig. 1 in Draufsicht dargestellte Bearbeitungsmaschine ist als Tischgerät ausgeführt, das heißt, dass diese Bearbeitungsmaschine auf einen vorhandenen, nicht dargestellten Tisch oder eine Arbeitsplatte abgestellt ist. Die Bearbeitungsmaschine weist ein Gehäuse 1 auf, an welchem Stellfüße 2 zum Aufstellen und Ausrichten auf einer festen Unterlage angebracht sind. In der oberen Gehäusehälfte ist ein Bearbeitungsraum 3 vorgesehen, der in etwa in der Mitte des Gehäuses 1 angeordnet ist. In dem Bearbeitungsraum 3 ist ein Werkstück 4 dargestellt, welches in einem Werkstückhalter 5 austauschbar befestigt ist. Innerhalb des Bearbeitungsraums 3 ist an jeder Seite des Werkstücks 4 ein Bearbeitungswerkzeug 6, 7 angeordnet, wobei jedes Bearbeitungswerkzeug 6, 7 in einer Werkzeugaufnahme 8, 9 befestigt ist.

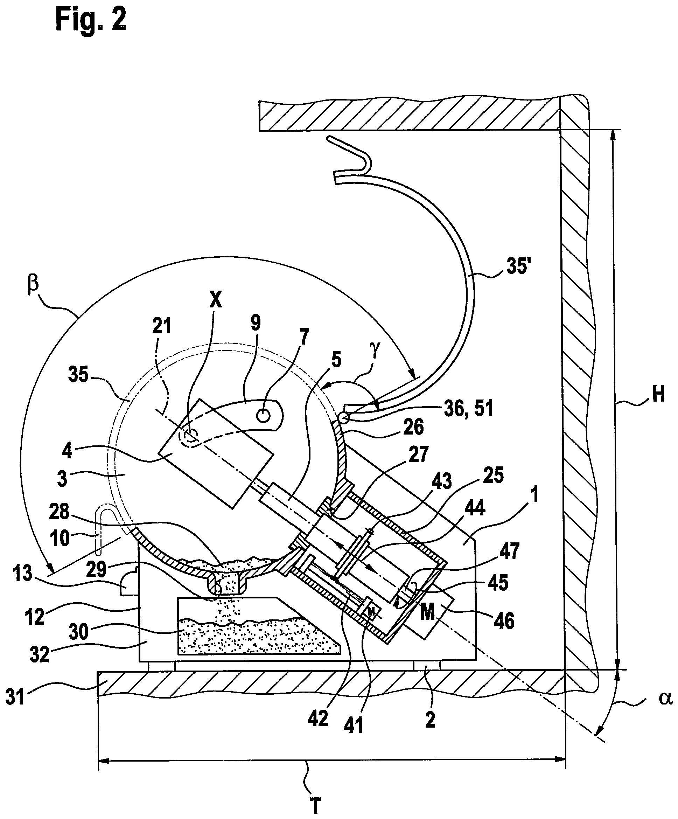

Der Bearbeitungsraum 3 ist von einem Deckel 35 (Fig. 2) verschlossen, von dem nur der Griff 10 dargestellt ist. Der Deckel selbst ist transparent und wird um eine Achse, die in einer zur Darstellungsebene parallelen Ebene liegt, geschwenkt. Dies wird später näher erläutert.

Seitlich neben dem Bearbeitungsraum 3 sind die Führungen und die Antriebe für die Werkzeugaufnahmen 8, 9 angeordnet, die jedoch von dem geschlossenen Gehäuse 1 verdeckt sind.

Im unteren Bereich des Gehäuses 1 können Schubfächer oder Klappen 11 bis 13 vorsehen sein, die von der Vorderseite her zugänglich sind. Dazu ist beispielsweise an der Schublade 12 ein Griff 14 vorgesehen.

In Fig. 2 ist ein Schnitt längs der Linie AA durch die Bearbeitungsmaschine aus Fig. 1 dargestellt. In dem Bearbeitungsraum 3 ist das Werkstück 4 in einer Werkstückaufnahme angeordnet und entlang einer Vorschubachse 21 verstellbar. Bei der Verstellung des Werkstücks 4 entlang der Vorschubachse 21 wird das Werkstück 4 an dem Bearbeitungswerkzeug 7 vorbeigeführt, wobei das Bearbeitungswerkzeug 7 an der Werkzeugaufnahme 9 gegenüber dem Werkstück 4 verstellbar ist.

Das Werkzeug 7 bzw. die Werkzeugaufnahme 9 können als 4-Achsen-System ausgebildet sein, im vorliegenden Fall würde dann das Werkzeug 7 auf das Werkstück 4 zu und von diesem weg bewegt werden können sowie quer oder schräg zur Vorschubachse 21 am Werkstück 4 entlang bewegt werden, etwa durch Schwenken der Werkzeugaufnahme 9 um die Drehachse X. Gleiches gilt für das nicht dargestellte Bearbeitungswerkzeug auf der anderen Seite des Werkstücks 4.

Es kann darüber hinaus vorgesehen sein, dass der Werkstückhalter 5 und damit das darin befestigte Werkstück 4 um die Vorschubachse 21 herum drehbar ist, etwa um Hinterschneidungen in dieser Raumrichtung herstellen zu können. Dazu ist ein Motor 41 vorgesehen, der eine im Maschinenbett gelagerte Stange 42 mit Außenverzahnung antreibt, wodurch wiederum ein an dem Werkstückhalter 5 drehfest verbundenes Zahnrad 43 angetrieben wird. Selbst bei einer Längsverschiebung des Werkstückhalters 5 in Richtung der Vorschubachse 21, also entlang des Pfeils 44, ist wegen der Erstreckung der Stange 42 eine Verdrehung des Werkstückhalters 5 möglich, dargestellt durch den Pfeil 45.

Der Vorschub des Werkstücks 4 entlang der Vorschubachse 21 wird durch Hineinschieben der Werkstückaufnahme 5 in den Bearbeitungsraum 3 mittels eines Antriebs 46 bewirkt, der eine Spindel 47 antreibt, die im Innern des Werkstückhalters in einer nicht dargestellten Spindelmutter geführt ist.

Die Werkstückaufnahme 5 ist dabei in einem Maschinenbett 25 gelagert, wobei das Maschinenbett 25 in eine Begrenzungswand 26 des Bearbeitungsraum 3 übergeht. Der Werkstückhalter 5 ist im Bereich der Durchbrechung zum Bearbeitungsraum 3 hin gegenüber diesem abgedichtet, so dass aus dem Bearbeitungsraum 3 keine Kühlflüssigkeit bzw. Späne oder Schleifstaub in das Maschinenbett 25 dringen kann. Diese Durchbrechung 27 ist oberhalb des Kühlmittelsumpfes 28 sowie einer Öffnung 29 in der Wand 26 angeordnet.

Durch die Öffnung 29 in der Wand 26 kann der Kühlmittelsumpf 28 in einen unterhalb des Bearbeitungsraums 3 angeordneten Behälter 30 fließen, wobei der Behälter 30 vor dem Maschinenbett 25 angeordnet ist und über eine Klappe 12, die mit dem Griff 13 geöffnet wird, aus dem Gehäuse 1 herausnehmbar ist.

Der Kühlmittelbehälter kann mit einer nicht dargestellten Pumpe zusammenwirken, um das im Behälter 30 gesammelte Kühlmittel gefiltert wieder in den Bearbeitungsraum 3 einzuführen. Diese Pumpe kann z.B hinter der Schublade 11 (Fig. 1) und neben dem Maschinenbett angeordnet sein.

Die Bearbeitungsmaschine steht mit ihrem Gehäuse 1 auf einer Platte 31, welche in horizontaler Richtung ausgerichtet ist. Die Vorschubachse 21 ist gegenüber dieser horizontalen Richtung um einen Winkel α zwischen 30 und 60° schräg gestellt, vorzugsweise um 45°. Dank dieser Anordnung wird zum einen sicher gestellt, dass der Werkstückhalter 5 nicht im Kühlmittelsumpf 28 liegt und dass ein ausreichend großer Behälter 30 für die Kühlflüssigkeit vorgesehen werden kann.

Darüber hinaus werden vorgegebene Höhen H und Tiefen T berücksichtigt.

Der Bearbeitungsraum 3 ist von einem Deckel 35 verschlossen, welcher mittels des Griffs 10 um ein Gelenk 36 verschwenkbar ist. Der Deckel 35 kann sich wie im dargestellten Ausführungsbeispiel um über eine Winkel β von mehr als 180° erstrecken und kann um einen Winkel γ um sein Drehgelenk 51 geöffnet werden. Der über 180° fortgesetzte Deckelabschnitt folgt dabei nicht weiter dem Kreisbogen, sondern erstreckt sich höchstens tangeantailan den Kreisbogen. Der Öffnungswinkel γ beträgt zwischen 80° und 110°.

Nach Öffnung des Deckels 35 ist die Werkstückaufnahme 5 von der Vorderseite des Gehäuses 1, in der Zeichnung auf der linken Seite, her zugänglich und das bearbeitete Werkstück 4 kann aus der schrägstehenden Werkstückaufnahme 5 entnommen und ein neues Werkstück eingesetzt werden. Auf Grund der schrägstehenden Werkstückaufnahme 5 liegt das Einfügen in der Bewegungsrichtung des Bedieners, so dass das "Einfädeln" des Werkstücks 4 in die Werkstückaufnahme 5 erleichtert ist.

Dadurch, dass sich der Deckel 35 über die Vorderseite des Gehäuses 1 hinaus auf die Rückseite des Gehäuses 1 erstreckt, kann der Bearbeitungsprozess von beiden Seiten eingesehen werden und kontrolliert werden.

Das Maschinenbett 25 und die damit verbundene Wand 26 sind im Gehäuse 1 abgestützt. Dazu ist das Gehäuse 1 an geeigneten Stellen mit dem Maschinenbett 25 und er Wand 26 verbunden, beispielsweise durch Schrauben.

Die Stellfüße 2 können so ausgebildet sein, dass eine Übertragung von Schwingungen, ob mechanisch oder akustisch, auf die Platte 31 gedämpft wird.

Der Behälter 30 ist in einem Stauraum 32 untergebracht, der sich unterhalb des Bearbeitungsraums 3 und vor dem Maschinenbett 25 über die Breite des Gehäuses 1 erstrecken kann, zumindest aber unmittelbar unterhalb des Bearbeitungsraums 3 liegt. In diesem Stauraum 32 kann außer des Behälters 3 für das Kühlmittel auch die Möglichkeit zur Unterbringung von Kleinteilen geschaffen werden, etwa mittels Schubkästen oder Klappen mit herausnehmbaren Einsätzen.

In dem Bearbeitungsraum ist am horizontal untersten Punkt eine Öffnung 29 in den darunter liegenden angeordneten Behälter 30 vorgesehen.

## Patentansprüche

1. Bearbeitungsmaschine, insbesondere für die Herstellung von Zahnersatzteilen oder Modellen davon, aufweisend einen Werkstückhalter (5) und mindestens ein Bearbeitungswerkzeug (6, 7), welche in einem Bearbeitungsraum (3) für ein darin angebrachtes Werkstück (4) angeordnet sind, wobei die Vorschubachse (21) für das Werkstück (4) in den Bearbeitungsraum (3) hinein gegenüber der Horizontalen um einen Winkel (α) schräg gestellt ist, **dadurch gekennzeichnet, dass** der Bearbeitungsraum (3) in einem das mindestens eine Bearbeitungswerkzeug (6, 7) und dessen Werkzeugaufnahme (8, 9) sowie den Werkstückhalter (5) sowie ein Maschinenbett (25) umschließenden Gehäuse (1) angeordnet ist, dass das Maschinenbett (25) schräg im Gehäuse angeordnet ist und dass unterhalb des Bearbeitungsraums (3) und vor dem Maschinenbett (25) ein Behälter (36) für Kühlflüssigkeit (28) vorgesehen ist.

2. Bearbeitungsmaschine nach Anspruch 1, **dadurch gekennzeichnet, dass** der Winkel α zwischen 30 und 60 Grad liegt, vorzugsweise bei 45 Grad.

3. Bearbeitungsmaschine nach einem der Ansprüche 1 bis 2, **dadurch gekennzeichnet, dass** es als Tischgerät ausgebildet ist.

4. Bearbeitungsmaschine nach einem der Ansprüche 1 bis 3, **dadurch gekennzeichnet, dass** das Gehäuse (1) einen den Bearbeitungsraum (2) zumindest um 150 Grad umgebenden Deckel (35) aufweist.

5. Bearbeitungsmaschine nach einem der Ansprüche 1 bis 4, **dadurch gekennzeichnet, dass** im Gehäuse (1) seitlich unterhalb des Bearbeitungsraums (3) ein Stauraum (32) vorhanden ist, der von der Vorderseite des Gehäuses (1) her zugänglich ist.

## Claims

1. Processing machine - in particular, for the production of dental prostheses or models of these - having a work piece mount (5) and at least one processing tool (6, 7) which are arranged in a processing space (3) for a work piece (4) mounted therein, wherein the feed axis (21) for the work piece (4) is positioned into the processing space (3) inclined at an angle (α) relative to horizontal, **characterized in that** the processing space (3) is arranged in a housing (1) enclosing the at least one processing tool (6, 7) and its tool receptacle (8, 9), as well as the work piece mount (5) and a machine bed (25); **in that** the machine bed (25) is arranged at an incline in the housing; and **in that** a container (36) for cooling fluid (28) is provided below the processing space (3) and before the machine bed (25).

2. Processing machine according to claim 1, **characterized in that** the angle α is between 30 and 60 degrees - preferably, 45 degrees.

3. Processing machine according to one of claims 1 through 2, **characterized in that** it is designed as a table device.

4. Processing machine according to one of claims 1 through 3, **characterized in that** the housing (1) has a cover (35) surrounding the processing space (2) by at least 150 degrees.

5. Processing machine according to one of claims 1 through 4, **characterized in that**, in the housing (1), a storage space (32) is present laterally below the processing space (3), which storage space (32) is accessible from the front side of the housing (1).

## Revendications

1. Machine d'usinage, en particulier conçue pour la fabrication de pièces de prothèse dentaire ou de gabarits de celles-ci, présentant un porte-pièce (5) et au moins un outil d'usinage (6, 7), qui se trouvent dans un espace d'usinage (3) destiné à une pièce (4) installée à l'intérieur, dans laquelle l'axe d'avance (21) pour la pièce (4) dans l'espace d'usinage (3) est placé de manière inclinée par rapport à l'horizontale selon un angle (α), **caractérisée en ce que** l'espace d'usinage (3) est disposé dans un boîtier (1) enfermant l'au moins un outil d'usinage (6, 7) et leurs logements de pièce (8, 9) ainsi que le porte-pièce (5) ainsi qu'une base de la machine (25), **en ce que** la base de la machine (25) est disposée de manière inclinée dans le boîtier et **en ce qu'**un récipient (36) pour un fluide de refroidissement (28) est prévu sous l'espace d'usinage (3) et devant la base de la machine (25).

2. Machine d'usinage selon la revendication 1, **caractérisée en ce que** l'angle α se situe entre 30 et 60 degrés, de préférence à 45 degrés.

3. Machine d'usinage selon l'une des revendications 1 à 2, **caractérisée en ce qu'**elle est conçue sous forme d'appareil de table.

4. Machine d'usinage selon l'une des revendications 1 à 3, **caractérisée en ce que** le boîtier (1) présente un couvercle (35) entourant l'espace d'usinage (2) au moins sur 150 degrés.

5. Machine d'usinage selon l'une des revendications 1 à 4, **caractérisée en ce qu'**un espace de rangement (32) est disponible dans le boîtier (1) à côté et en dessous de l'espace d'usinage (3), qui est accessible depuis le côté avant du boîtier (1).
